# EUROPÄISCHE PATENTSCHRIFT

(11) **EP 0 484 466 B1**
(45) Veröffentlichungstag und Bekanntmachung des Hinweises auf die Patenterteilung: **13.09.1995**
(21) Anmeldenummer: 90917924.4
(22) Anmeldetag: 11.07.1990
(51) Int. Cl.: B01D 69/10, B01D 61/36

(54) **MEMBRAN FÜR DIE TRENNUNG FLÜSSIGER STOFFGEMISCHE NACH DEM PERVAPORATIONSPRINZIP**
MEMBRANE FOR SEPARATING LIQUID MIXTURES OF SUBSTANCES BY PERVAPORATION
MEMBRANE POUR LA SEPARATION DE MELANGES LIQUIDES PAR LE PRINCIPE DE LA PERVAPORATION

(30) Priorität: 25.07.1989 DE 3924501
(43) Veröffentlichungstag der Anmeldung: 13.05.1992
(73) Patentinhaber: GKSS-FORSCHUNGSZENTRUM GEESTHACHT GMBH, D-21502 Geesthacht (DE)
(72) Erfinder: BENGTSON, Gisela, D-2000 Hamburg 70 (DE); BÖDDEKER, Karl, W., D-2413 Breitenfelde (DE)
(74) Vertreter: Niedmers, Ole, Dipl.-Phys.
(86) Internationale Anmeldenummer: DE9000520
(87) Internationale Veröffentlichungsnummer: WO9101176

(56) Entgegenhaltungen:
- EP-A- 0 264 113
- DE-U- 8 908 997
- FR-A- 2 336 962
- FR-A- 2 425 876
- US-A- 2 944 017
- US-A- 4 214 994

## Beschreibung

Die Erfindung betrifft eine Membran für die Trennung flüssiger Stoffgemische nach dem Pervaporationsprinzip, wobei die Membran aus einem quellfähigen, elastomeren und homogenen Polymer oder Polymergemisch besteht, in dem ein als ein Gittergewebe ausgebildeter, parallel zur Membranoberfläche verlaufender, membranstabilisierender Träger eingeschlossen ist, und die Membran eine Zulaufseite und eine Permeatseite aufweist.

Eine derartige Membran ist beispielsweise aus der FR-A-2 425 876 bekannt. Diese Membran ist auf der Basis eines Silikonharzes aufgebaut. Zur Verstärkung ist ein gitterförmiges Tragelement vorgesehen, das vollständig von der Membran umschlossen ist. Eine andere Membran dieser Art ist aus der US-A-3 770 567 bekannt. Diese bekannte Membran ist eine sogenannte Ionenaustauschermembran, d.h. die Trennung des flüssigen Stoffgemisches erfolgt bei dieser bekannten Membran nach dem Prinzip der Elektrodialyse. Diese bekannte Ionenaustauschermembran ist mit einem Trägermaterial versehen, so daß diese gegenüber ungestützten Membranen größeren Drücken des zu trennenden flüssigen Stoffgemischs standhalten kann. Dabei ist der vollständige Einschluß von Gewebefäden des Trägers in die Polymermasse eine wesentliche Bedingung für eine fehlstellenfreie Gewebeverstärkung der Membran, wobei die Polymermasse dort auch dünner sein kann, als es der Gewebelage entspricht. Die lineare Quellausdehnung der bekannten Ionenaustauschermembran verringert sich bei Einsatz des gewebeförmigen Trägers von 14 bis 17 % (ohne Träger) auf 3 % mit dem gewebeförmigen Träger.

Bei Membranen hingegen, die bei der Trennung von flüssigen Stoffgemischen nach dem Prinzip der Pervaporation arbeiten, beaufschlagt das zu trennende flüssige Gemisch die Membran im Querstrom, während das die Membran verlassende Permeat als Dampf abgeführt wird, entweder durch das Anlegen eines Vakuums an der Membranrückseite oder mit Hilfe eines umlaufenden Trägergasstromes. Die Trennung der Gemischkomponenten kommt durch deren unterschiedliche Membranpermeabilität zustande und kann auch gegen das Dampfdruckverhältnis, d.h. unter Bevorzugung der schwerer flüchtigen Komponenten erfolgen. Die Membranpermeabilität setzt sich zusammen aus der Sorption aus dem flüssigen Zulaufgemisch in die Membran, der Diffusion durch die Membran hindurch, und der Desorption von der Membranrückseite in den Permeatdampfraum. Die Sorption hat dabei den größten Einfluß auf den Trenneffekt, d.h. daß die Trennung überwiegend auf der bevorzugten Sorption einer Komponente des Stoffgemisches gegenüber der bzw. den anderen durch die Polymermembran beruht. Mit der sorptiven Flüssigkeitsaufnahme durch die Polymermembran ist eine Quellung der Membran verbunden. Die mit der Konzentration an bevorzugt permeierender Komponente im Zulaufgemisch zunehmende Membranquellung wird durch sogenannte Sorptionsisothermen beschrieben, die im einfachsten Fall einen linearen Anstieg der Quellung mit der Zulaufkonzentration zeigen.

Ein bevorzugter Einsatzbereich der Membrantrennung mittels Pervaporation ist die Trennung wässrig-organischer Flüssiggemische. Insbesondere wässrig-organische Flüssiggemische, bestehend aus Wasser mit einem relativ geringen Anteil an organischer Komponente, treten weithin als organisch belastete Abwässer sowie als Prozeßlösungen in der Biotechnologie auf. Die Trennung derartiger Gemische unter bevorzugtem Austrag des organischen Minderanteils erfolgt durch Pervaporation mittels Membranen an elastomeren Polymeren wie beispielsweise Silikongummi (Polydimethylsiloxan), Polyuretan oder Polyether-Polyamid-Kopolymeren. Im Gegensatz zur Verdampfung können durch Pervaporation auch organische Stoffe, die weit höher sieden als das Wasser selbst, selektiv aus dem Wasser entfernt werden.

Voraussetzung für eine günstige Trennwirkung, ausgedrückt durch die Anreicherung der organischen Komponente im Permeat in Verbindung mit deren Abreicherung (Entsorgung) im Retentat, ist das selektive Aufnahmevermögen des Membranpolymers für die organische Gemischkomponente, das sich durch Quellung manifestiert. Elastische Polymere neigen dabei zu besonders starker Quellung, die ihrerseits eine Bedingung für die angestrebte Trennwirkung ist. Zusammenfassend kann gesagt werden, daß bei elastischen Membranen aus einem Polymer bzw. einem Ploymergemisch, die nach dem Prinzip der Pervaporation betrieben werden, eine Behinderung der Quellung auch das Aufnahmevermögen der Membran für die zu pervaporierende Komponente behindern würde, mit der Folge, daß der Trenneffekt der Membran vermindert würde.

Bei dem eingangs erwähnten Ionenaustauschermembran nach dem Prinzip der Elektrodialyse (US-PS 3 770 567) sind die Membranen verhältnismäßig dick ausgebildet, was für eine Stofftrennung nach dem Prinzip der Elektrodialyse grundsätzlich nachteilig ist. Die bekannte Ionenaustauschermembran wurde deshalb, neben der eingangs erwähnten besseren Handhabbarkeit und der angestrebten größeren Druckstabilität, mit einer Gewebeverstärkung versehen, um der Membranquellung entgegenzuwirken. Bei der bekannten Ionenaustauschermembran wurde durch die dortigen Maßnahmen die Quellausdehnung von 14 bis 17 % auf 3 % verringert, was genau entgegengesetzt zu dem Ziel ist, das erfindungsgemäß verwirklicht werden muß.

Es ist Aufgabe der vorliegenden Erfindung, eine Membran für die Trennung flüssiger Stoffgemische zu schaffen, bei der dem bei der Pervaporation auftretenden Quelldruck ungehindert nachgegeben werden kann, ohne daß dabei die Flächenabmessungen der Membran im wesentlichen verändert werden, daß die Membran hohen Konzentrationen an zur Quellung befähigten Wasserinhaltsstoffen ebenso standhält wie betriebsbedingtem Wechseln des Quellzustandes, daß dem Austrag des dampfförmigen Permeats aus der Membran im wesentlichen kein fremdbestimmter Widerstand entgegengesetzt wird, daß der Fluß durch die Membran gegenüber bisherigen Membranen erhöht und die Selektivität der Membran vergrößert wird, und daß die Membran nach bisherigen Fertigungsmethoden für bekannte Membranen herstellbar ist, so daß diese einfach und kostengünstig bereitgestellt werden kann.

Die Aufgabe wird gemäß der Erfindung dadurch gelöst, daß bei der Membran zur Trennung des Stoffgemisches nach dem Pervaporationsprinzip der Träger in der Durchgangsrichtung des Stoffgemisches durch die Membran asymmetrisch zur Permeatseite hin verschoben angeordnet ist.

Der Vorteil der erfindungsgemäßen Membran liegt im wesentlichen darin, daß diese grundsätzlich weiterhin eine Membran ist, die aus einem homogenen Polymerfilm gebildet wird, in dem jedoch asymmetrisch zur Permeatseite hin verschoben das Gittergewebe eingeschlossen ist. Bei Ausführung der Stoffgemischtrennung nach dem Prinzip der Pervaporation ist die Zulaufseite der Membran die Seite, die dem flüssigen Stoffgemisch bzw. Zulaufgemisch zugekehrt ist, während die Permeatseite der Membran quasi die gittergewebeverstärkte Seite der Membran ist, die dem Unterdruck ausgesetzt ist, der sich beim Abpumpen des Permeats als Dampf auf der Permeatseite der Membran bildet. Durch die Quellung des Polymers der erfindungsgemäßen Membran konnte der Fluß und die Selektivität gegenüber Membranen gleicher Äquivalentdicke, die kein Gittergewebe enthalten, signifikant erhöht werden (Fluß bzw. Gesamtflußdichte in g/m² x h). Als Äquivalentdicke wird dabei die Membrandicke bezeichnet, die sich bei gleicher auf die Fläche bezogener Polymermenge ohne das Gittergewebe ergeben würde.

Bei der Membran gemäß der Erfindung kann es zweckmäßig sein, daß die Quellung im wesentlichen im Bereich der Zulaufseite der Membran erfolgt, die an den Träger bzw. das Gittergewebe angrenzt. Es kann, bezogen auf den Gesamtquerschnitt der Membran, von einem anisotropen Quellzustand der Membran, bezogen auf den Querschnitt gesprochen werden. Dabei ist die Quellung auf der Zulaufseite maximal ausgebildet bis zu einem praktisch ungequollenen Zustand der Membran auf der Permeatseite. Wesentlich und von großem Vorteil für die Erfindung ist, daß auf der wenig oder praktisch überhaupt nicht gequollenen Permeatseite der Membran das sich dort befindliche Gittergewebe den Quellzustand der Membran praktisch überhaupt nicht beeinflußt. Wohl jedoch verhindert es vorteilhafterweise eine Längenausdehnung der Membran, die sich infolge der zulaufseitigen Membranquellung an der Zulaufseite normalerweise einstellen würde.

In zweckmäßiger Weise nimmt der Grad der Quellung von der Zulaufseite zur Permeatseite der Membran stetig ab, wobei wie schon erwähnt, dabei vorzugsweise der Grad der Quellung an der Permeatseite der Membran zu Null geht.

Es hat sich gezeigt, daß vorteilhafterweise Membranen von wenigstens einer Äquivalentdicke zwischen 5 x 10⁻² und 2 x 10⁻¹ mm, die zudem auf herkömmliche Weise grundsätzlich wie nicht verstärkte Membranen (ohne Gittergewebe) nach den bekannten Gießverfahren hergestellt werden können, sehr gute Flußeigenschaften und eine hohe Selektivität aufweisen.

Der gitterförmige Träger wird vorzugsweise durch ein Kunststoffgewebe, beispielsweise ein Polyestergewebe gebildet. Es ist aber auch möglich, den gewebeförmigen Träger vorteilhafterweise durch eine Metallgaze auszubilden, wobei es ebenfalls denkbar ist, den gitterförmigen Träger aus einer Kombination aus Kunststoff- und Metallgewebe herzustellen.

Bei einem bevorzugten Gittergewebe der Membran beträgt die Fadendicke ca. 2,5 x 10⁻² bis 10⁻² mm und besteht aus einem Polyester-Monofilament.

Die Membran kann grundsätzlich auf beliebige geeignete Weise ausgebildet sein, d.h. sie kann vorzugsweise als Flachmembran gestaltet sein und eignet sich in der Gestaltung zum Einbau in Membranmodulen, wobei sie sich in bezug auf ihre Eigenschaften in derartigen Fällen an den Eigenschaften ungequollener Polymerfilmen orientiert. Es ist aber auch möglich, die Membran gemäß einer anderen vorteilhaften Ausführungsform als Schlauch auszubilden und sie kann auch in Vorrichtungen zur Anwendung kommen, die mit Schlauchmembranen ungequollener Art versehen werden.

Bei den als Schlauchmembranen ausgestalteten Membranen kann die Außenseite der Membran oder aber, je nach Anwendungsfall auch die Innenseite der Membran die Permeatseite sein, d.h. an der jeweilig gewünschten Seite ist asymmetrisch in bezug auf den Membranquerschnitt der Träger bzw. das Gittergewebe angeordnet.

Die Erfindung wird nun unter Bezugnahme auf die einzige schematische Zeichnung sowie mehrerer Diagramme anhand eines Ausführungsbeispiels beschrieben. Diese zeigen:
- Fig. 1: einen Schnitt durch den Querschnitt der Membran und schematisch die Größe der dabei auftretenden Membranquellvektoren,
- Fig. 2: den Fluß von Nitrobenzol und Wasser in Abhängigkeit von der Zulaufkonzentration bei einer erfindungsgemäßen Membran, wobei das Stoffgemisch die Membran von der Zulaufseite (Gitter unten) und von der Permeatseite anströmt (Gitter oben),
- Fig. 3: den Fluß von Phenol in Abhängigkeit von der Zulaufkonzentration bei einer erfindungsgemäßen Membran, wobei das Stoffgemisch die Membran von der Zulaufseite (Gitter unten) und von der Permeatseite anströmt (Gitter oben), sowie eine Membran ohne Träger, und
- Fig. 4: einen Schnitt durch eine Membran auf der Grundlage einer Raster-Elektronenmikroskopaufnahme, wobei ersichtlich ist, daß der gittergewebeförmige Träger vom die Membran bildenden Polymer nicht benetzt wird.

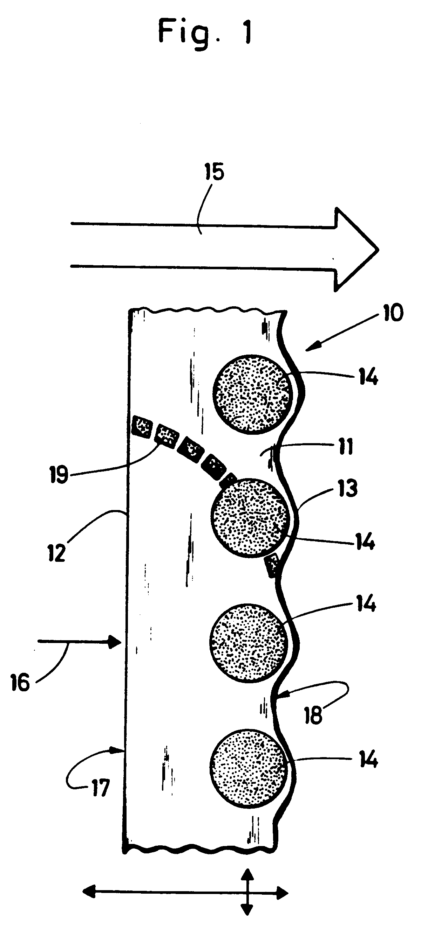

Die Membran 10 besteht im wesentlichen aus einem Polymer 11, in dem ein Träger 14, der in Form eines Gittergewebes ausgebildet ist, asymmetrisch im Querschnitt angeordnet ist. Die asymmetrische Anordnung des Trägers 14 in der Membran bzw. im die Membran 10 bildenden Polymer 11 ist derart, daß dieser zur Permeatseite 18 hin verschoben angeordnet ist, vgl. die Fig. 1. Die eine Membranoberfläche 12 stellt dabei die Zulaufseite dar, d.h. die Seite, an die das zu trennende Stoffgemisch anströmt, während die andere Membranoberflache 13 die Permeatseite 18 darstellt, an der das die Membran 10 in Durchgangsrichtung 15 durchquerende Stoffgemisch 16 als dampfförmiges Permeat auf der Permeatseite 18 mittels Vakuum als Dampf abgeführt wird.

Die unter der Membran angeordneten beiden quer und längs verlaufenden Pfeile stellen die Quellvektoren dar, und zeigen die Größenverhältnisse des Quellgrades des Polymers 11 in der Membranfläche und in der Membranquerrichtung. Die dargestellte Membran weist auf der Zulaufseite 17 eine maximale Quellung des Polymers 11 auf und zeigt auf der Permeatseite 18 praktisch einen ungequollenen Zustand. Die Zwischenzustände des Quellgrades der Membran 10 sind in der Fig. 1 als punktierte Profillinie 19 schematisch dargestellt. Das auf der wenig oder überhaupt nicht gequollenen Permeatseite der Membran 10 befindliche Gittergewebe 14 beeinflußt den Quellzustand der Membran 10 dort nicht. Wohl verhindert es jedoch eine Längenausdehnung der Membran infolge der zulaufseitigen Membranquellung, die sich normalerweise einstellen würde, welche sich nun nur in Querrichtung, d.h. als Membranverdickung, ausbilden kann. Dieses zeigen die vorerwähnten Quellvektoren bezüglich der linearen Ausdehnungsmöglichkeit der Membran 10 unter Pervaporationsbedingungen.

Zur Herstellung der Membran 10 mit asymmetrisch eingebautem Gittergewebe 14 kommen grundsätzlich die gleichen relativ einfachen Verfahren wie bei der Herstellung von homogenen Polymerfilmen zur Anwendung, d.h. die Herstellung aus Gießlösungen unter Verwendung verdampfbarer Lösungsmittel oder aus der Polymerschmelze. Der durch den Einbau des Gittergewebes 14 bedingten Verdickung der Membran 10 wird im Leistungsvergleich mit unverstärkten Polymermembran dadurch Rechnung getragen, daß die je Einheitsfläche zum Einsatz kommende Polymermenge vergleichbar gehalten wird.

Wesentliche Eigenschaften der Membran 10 ergeben sich aus folgenden Beispielen. Als Polymermembran wird ein Polyether-Block-Amid (Handelsname Pebax 4033 der Fa. Atochem, Paris) verwendet, das sich als besonders günstig für die Pervaporation von organischen Schwersiedern, insbesondere von Phenolen, aus Wasser erwiesen hat. Ein bevorzugtes Gittergewebe ist ein Polyester-Monofilament mit einer Fadendicke von beispielsweise 8,5 x 10⁻² mm (Handelsname Estal, der Fa. Schweiz. Seidengazefabrik, Thal). Verschiedene Membranen mit einer Äquivalentdicke zwischen 7 x 10⁻² und 1,5 x 10⁻¹ mm entsprechend einer Strukturdicke zwischen 2,2 x 10⁻¹ und 3,1 x 10⁻¹ mm wurden gemäß der Erfindung mit einem asymmetrisch in der Membran 10 angeordneten Träger bzw. Gittergewebe 14 versehen in einem Gießverfahren hergestellt. Die Pervaporationsversuche wurden in wässriger Phenol-Lösung im Konzentrationsbereich von 100 bis 50.000 ppm (5 %) Phenol bei 50° C durchgeführt. Es wurden folgende Membranen miteinander verglichen.
I = Homogener Polymerfilm ohne Gittergewebe der Dicke 1,5 x 10⁻¹ mm; diese Dicke entspricht bei den Gittergewebemembranen der Äquivalentdicke.
II = Ploymerfilm mit asymmetrisch integriertem Polyester-Gittergewebe der Strukturdicke 3,1 x 10⁻¹ mm, Äquivalentdicke 150 µm in der erfindungsgemäßen Einbaulage entsprechend Fig. 1.
III = Polymerfilm der obigen Beschreibung, jedoch in entgegengesetzter Einbaulage, d.h. mit dem flüssigen Zulauf zugekehrter Gewebeverstärkung.

### Beispiel 1

Verdünnte Lösungen (100 bis 1000 ppm Phenol im Zulauf). Die drei Membranen lieferten folgende Versuchsergebnisse bezüglich Fluß (als Gesamtflußdichte in g/(m²h)) und Selektivität (als Anreicherungsfaktor für Phenol):

| Zulauf-Konzentration | Membran I | | Membran II | | Membran III | |
|---|---|---|---|---|---|---|
| | Fluß | Selektivität | Fluß | Selektivität | Fluß | Selektivität |
| 100 ppm | 34 | 192 | 36 | 194 | 36 | 139 |
| 1000 ppm | 42 | 143 | 46 | 152 | 42 | 120 |

Das Ergebnis dieses Beispiels ist: Bei verdünnten Zulauflösungen und entsprechend niedriger Membranquellung zeigen die unverstärkte (I) und die erfindungsgemäß seitlich verstärkte Membran (II) vergleichbare Pervaporationsleistung. Da jedoch die verstärkte Membran bei gleicher flächenbezogener Polymermenge viel dicker ist als die unverstärkte Vergleichsmembran, ist die vergleichbare Pervaporationsleistung bereits als Vorteil der erfindungsgemäß konzipierten Membran zu werten. Das in der vorliegenden Erfindung vorausgesetzte asymmetrische Quellverhalten unter Pervaporationsbedingungen wird durch den Vergleich der beiden Einbaulagen der asymmetrisch verstärkten Membran bestätigt. Wird nämlich die gewebeverstärkte Membranseite dem flüssigen Zulauf zugekehrt (III), so bleibt die Selektivität bei sonst gleichen Bedingungen deutlich hinter derjenigen der erfindungsgemäß eingesetzten Membran (II) zurück. Die nachteiligen Behinderungen der zulaufseitigen Membranquellung wird hier unmittelbar erkennbar als verringerte Aufnahmefähigkeit der Membran für die abzutrennende Gemischkomponente, hier für das Phenol. Bleibt jedoch die Quellfähigkeit erhalten, wie mit der vorliegenden Erfindung bezweckt, so stellt die Gewebestabilisierung keine Beeinträchtigung dar.

### Beispiel 2

Konzentrierte Lösungen (10.000 bis 50.000 ppm Phenol im Zulauf). Die drei Membranen der obigen Beschreibung lieferten folgende Testergebnisse:

| Zulauf konzentration | Membran I | | Membran II | | Membran III | |
|---|---|---|---|---|---|---|
| | Fluß | Selektivität | Fluß | Selektivität | Fluß | Selektivität |
| 10.000 ppm | 92 | 54 | 137 | 53 | 105 | 52 |
| 20.000 ppm | 143 | 35 | 214 | 35 | 158 | 38 |
| 30.000 ppm | 195 | 26 | 300 | 26 | 216 | 26 |
| 40.000 ppm | 238 | 20 | 377 | 20 | 285 | 20 |

Hohe Konzentrationen an organischen Zulaufkomponenten bedeutet hohe Membranquellung mit entsprechender Einbuße an mechanischer Festigkeit. Der stabilisierende Einfluß des Gittergewebes kommt darin zum Ausdruck, daß unter den Bedingungen dieses Beispiels die unverstärkte Membran (I) bei 50.000 ppm Phenol im Zulauf nicht beständig ist, während die verstärkte Membran (II) über den Versuchszeitraum ihre Integrität bewahrte. Bezüglich der Pervaporationsleistung zeigen die Versuchsergebnisse, daß die Gewebeverstärkung ganz allgemein die Flußleistung der Membranen erhöht, ohne deren Selektivität zu mindern; bei ausreichend hoher Membranquellung betrifft die Flußsteigerung somit gleichermaßen alle Komponenten des Zulaufgemisches, hier Phenol und Wasser. Der Vergleich der beiden Einbaulagen der asymmetrisch verstärkten Membran (II und III) zeigt nicht nur den Vorteil zugunsten der erfindungsgemäßen Konfiguration (II), sondern auch, daß diese gegenüber der unverstärkten Vergleichsmembran (I) einer erhebliche Verbesserung darstellt.

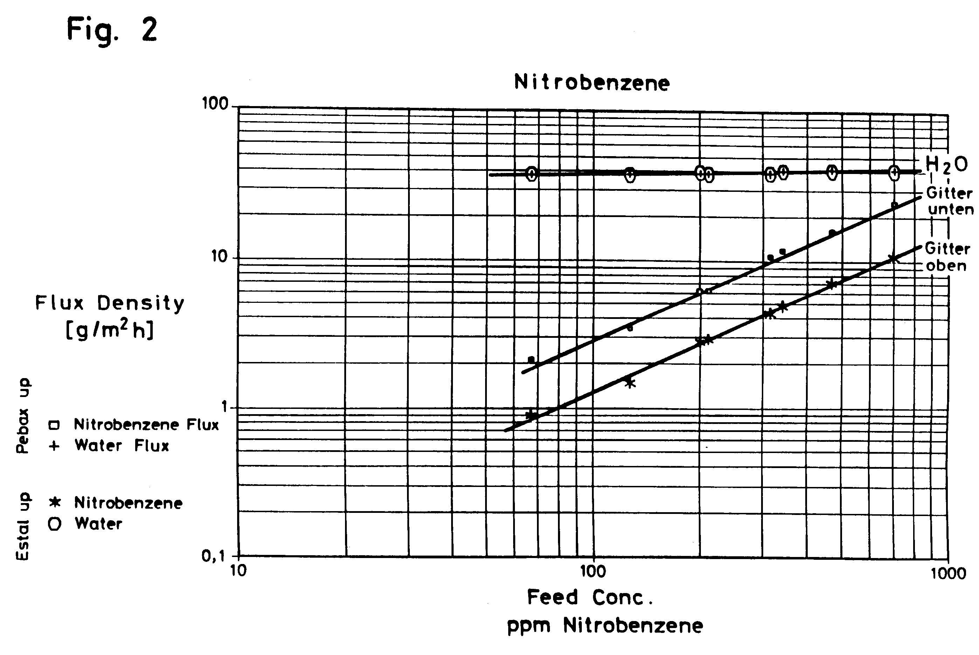

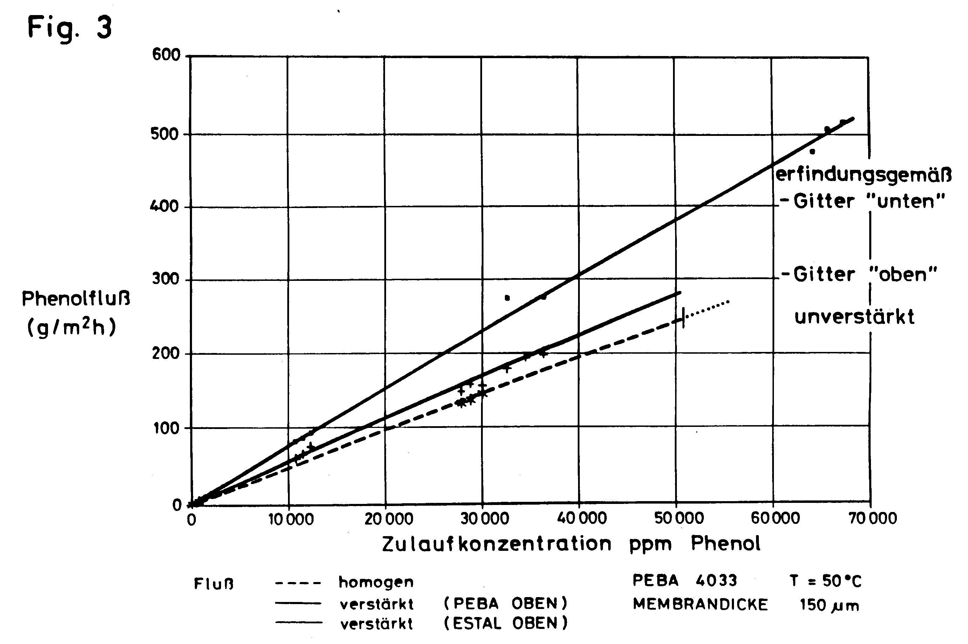

In den Fig. 2 und 3 sind weitere Versuchsergebnisse dargestellt, die bei der Verwendung der erfindungsgemäßen Membrane für die Trennung von Nitrobenzol (Fig. 2) und Phenol (Fig. 3) erzielt worden sind. Wie aus den Kurvenverläufen ersichtlich, wird ein besonders hoher Permeatfluß sowohl bei Phenol als auch bei Nitrobenzol bei den erfindungsgemäßen Membranen erhalten, bei denen das Gitter auf der Zulaufseite (Gitter unten) angeordnet ist. Insbesondere aus Fig. 3 ist ersichtlich, daß bei der erfindungsgemäßen Membran mit dem permeatseitig angeordneten Gitter ein wesentlich höherer Phenolfluß als bei einer Membran erhalten worden ist, die kein Gitter aufweist, also unverstärkt ist.

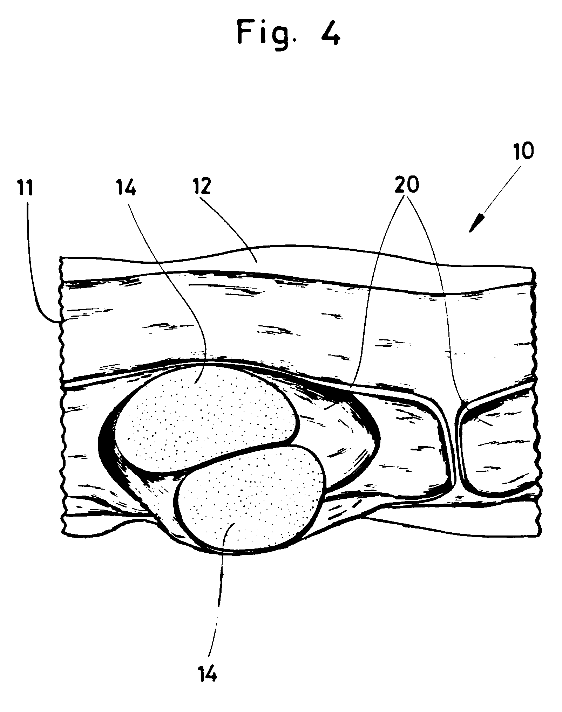

Unter Bezugnahme auf Fig. 4 sei darauf hingewiesen, daß der gittergewebeförmige Träger 14 durch das Polymer 11 der Membran 10 nach der Herstellung der Membran 10 praktisch nicht benetzt ist. Es ist ein Hohlraumsystem 20 ersichtlich, und zwar im Bereich des vom Polymer 11 unbenetzten gittergewebeförmigen Trägers 14. Das bedeutet eine Vergrößerung der permeatseitigen 18 Oberfläche (Desorptionsfläche) und damit definitionsgemäß eine Erhöhung der Flußdichte der Membran 10.

### Bezugzeichenliste

- 10: Membran
- 11: Polymer
- 12: Membranoberfläche
- 13: Membranoberfläche
- 14: Träger
- 15: Durchgangsrichtung des Stoffgemisches
- 16: Stoffgemisch
- 17: Zulaufseite
- 18: Permeatseite
- 19: Quellgradprofillinie
- 20: Hohlraumsystem

## Patentansprüche

1. Membran für die Trennung flüssiger Stoffgemische nach dem Pervaporationsprinzip, wobei die Membran (10) aus einem quellfähigen, elastomeren und homogenen Polymer oder Polymergemisch besteht, in dem ein als Gittergewebe ausgebildeter, parallel zur Membranoberfläche verlaufender, membranstabilisierender Träger (14) eingeschlossen ist, und die Membran (10) eine Zulaufseite (17) und eine Permeatseite (18) aufweist, dadurch gekennzeichnet, daß der Träger (14) in der Durchgangsrichtung des Stoffgemisches (16) durch die Membran (10) asymmetrisch zur Permeatseite (18) hin verschoben angeordnet ist.

2. Membran nach Anspruch 1, dadurch gekennzeichnet, daß die Membran (10) wenigstens eine Äquivalentdicke zwischen 5 x 10⁻² bis 2 x 10⁻¹ mm aufweist.

3. Membran nach einem oder beiden der Ansprüche 1 oder 2, dadurch gekennzeichnet, daß der gittergewebeförmige Träger (14) durch ein Polyestergewebe gebildet wird.

4. Membran nach einem oder beiden der Ansprüche 1 oder 2, dadurch gekennzeichnet, daß der gittergewebeförmige Träger (16) durch eine Metallgaze gebildet wird.

5. Membran nach einem oder mehreren der Ansprüche 1 bis 4, dadurch gekennzeichnet, daß das Gittergewebe eine Fadendicke von 2,5 x 10⁻² mm bis 10⁻² mm aufweist.

6. Membran nach einem oder mehreren der Ansprüche 1 bis 5, dadurch gekennzeichnet, daß diese als Flachmembran ausgebildet ist.

7. Membran nach einem oder mehreren der Ansprüche 1 bis 5, dadurch gekennzeichnet, daß diese als Schlauchmembran ausgebildet ist.

8. Membran nach Anspruch 7, dadurch gekennzeichnet, daß die Permeatseite (18) die Außenseite der Schlauchmembran ist.

9. Membran nach Anspruch 7, dadurch gekennzeichnet, daß die Permeatseite (18) die Innenseite der Schlauchmembran ist.

## Claims

1. Membrane for the separation of fluid mixtures according to the pervaporation principle, where the membrane (10) consists of a swellable, elastomeric and homogeneous polymer or polymer mixture enclosed in which is a membrane-stabilizing carrier (14) designed in the form of a latticed fabric and running parallel to the membrane surface, and the membrane (10) presents an inlet side (17) and a permeate side (18), characterized in that the carrier (14) is positioned asymmetrically sideways towards the permeate side (18) in the direction of passage of the mixture (16) through the membrane (10).

2. Membrane according to Claim 1, characterized in that the membrane (10) presents an equivalent thickness of at least between 5 x 10⁻² to 2 x 10⁻¹ mm.

3. Membrane according to one or both of Claims 1 or 2, characterized in that the latticed fabric carrier (14) is formed by a polyester fabric.

4. Membrane according to one or both of Claims 1 or 2, characterized in that the latticed fabric carrier (14) is formed by a metal gauze.

5. Membrane according to one or more of Claims 1 to 4, characterized in that the latticed fabric presents a thread thickness of 2.5 x 10⁻² mm to 10⁻² mm.

6. Membrane according to one or more of Claims 1 to 5, characterized in that it is formed as a flat membrane.

7. Membrane according to one or more of Claims 1 to 5, characterized in that it is formed as a tubular membrane.

8. Membrane according to Claim 7, characterized in that the permeate side (18) is the outer side of the tubular membrane.

9. Membrane according to Claim 7, characterized in that the permeate side (18) is the inner side of the tubular membrane.

## Revendications

1. Membrane de séparation de mélanges liquides selon le principe de pervaporation (ou évaporation à travers une membrane), la membrane (10) se composant d'un polymère ou mélange de polymères susceptible de gonfler, élastomère et homogène, dans lequel est inclus un support (14) stabilisateur de membrane, s'étendant parallèlement à la surface de la membrane, et qui est construit comme un tissu grillagé, la membrane (10) présentant une face d'entrée (17) et une face perméat (18), caractérisée en ce que le support (14) est disposé dans la direction de passage du mélange liquide (16) au travers de la membrane (10), décalé assymétriquement par rapport à la face perméat (18).

2. Membrane selon la revendication 1, caractérisée en ce que la membrane (10) présente au moins une épaisseur équivalente comprise entre 5 x 10⁻² et 2 x 10⁻¹ mm.

3. Membrane selon l'une ou les deux des revendications 1 ou 2, caractérisée en ce que le support (14) en forme de tissu grillagé est réalisé à partir d'un tissu polyester.

4. Membrane selon l'une ou les deux des revendications 1 ou 2, caractérisée en ce que le support (14) en forme de tissu grillagé est réalisé à partir d'une gaze métallique.

5. Membrane selon l'une des revendications 1 à 4, caractérisée en ce que le tissu grillagé présente une épaisseur de fils comprise entre 2,5 x 10⁻² mm et 8,5 x 10⁻² mm.

6. Membrane selon l'une ou plusieurs des revendications 1 à 5, caractérisée en ce qu'elle est réalisée comme une membrane plate.

7. Membrane selon l'une ou plusieurs des revendications 1 à 5, caractérisée en ce qu'elle est réalisée comme une membrane tubulaire.

8. Membrane selon la revendication 7, caractérisée en ce que la face perméat (18) est la face extérieure de la membrane tubulaire.

9. Membrane selon la revendication 7, caractérisée en ce que la face perméat (18) est la face intérieure de la membrane tubulaire.
